# EUROPEAN PATENT SPECIFICATION

(11) **EP 1 397 900 B1**
(45) Date of publication and mention of the grant of the patent: **10.08.2005**
(21) Application number: 02720406.4
(22) Date of filing: 11.04.2002
(51) Int. Cl.: H04L 29/12, H04L 29/06, H04L 12/56

(54) **PACKET-ORIENTED DATA COMMUNICATIONS BETWEEN MOBILE AND FIXED DATA NETWORKS**
PAKETORIENTIERTER DATENAUSTAUSCH ZWISCHEN BEWEGLICHEN UND ÖRTLICH FESTGELEGTEN DATENNETZEN
TRANSMISSION DE DONNEES PAR PAQUETS ENTRE DES RESEAUX MOBILES ET DES RESEAUX DE FIXES

(30) Priority: 18.06.2001 EP 01810589
(43) Date of publication of application: 17.03.2004
(73) Proprietor: International Business Machines Corporation, Armonk, NY 10504 (US)
(72) Inventor: BINDING, Carl, CH-8803 Rueschlikon (CH); DOLIVO, François, CH-8820 Waedenswil (CH); HERMANN, Reto, CH-8863 Buttikon (CH); HUSEMANN, Dirk, CH-8134 Adliswil (CH); SCHADE, Andreas, CH-8134 Adliswil (CH)
(74) Representative: Toleti, Martin
(86) International application number: PCT/IB2002/001347
(87) International publication number: WO 2002/103986

(56) References cited:
- US-A- 6 055 236
- US-A- 6 119 171

## Description

The present invention generally relates to packet data communications between mobile and fixed data networks and particularly relates to address handling for such data communications.

A typical packet -oriented data network comprises a plurality of data processing nodes each having a processor, a memory connected to the processor, computer program code stored in the memory and executable by the processor, and a network interface to couple the node to the network. The computer program code includes application programs for effecting data communication under program control with other nodes in the network via the network interface. Data traffic is communicated from a source node to a destination in discrete packets referred or protocol data units (PDUs). Each PDU comprises a header portion and a payload portion. The payload portion carries data to be communicated. The header portion carries control information for effecting communication of the PDU to the destination. Such PDUs are communicated from an application program in the source node to an application program in the destination node in accordance with the International Standards Organization (ISO) reference model. The ISO reference model defines a stack of logical data processing protocol layers between the application programs in the source node and destination node and the network. Data to be communicated from the source application program to the designation application program is passed from the source application program to the network via the protocol stack at the source node. On receipt, the data is passed from the network to the destination application program via the protocol stack at the destination node.

The stack at both the source node and the destination node comprises an application layer, a presentation layer, a session layer, a transport layer, a network layer, a link layer, and a physical layer. The application layer provides a user interface to a range of network-wide distributed services such as file transfer access and management, as well as general message interchange services such as electronic mail. The application layer is disposed between the application program and the presentation layer. The presentation layer negotiates and selects appropriate transfer syntaxes to be used during a transaction so that the syntax of messages being exchanged between two application entities is maintained. The presentation layer is disposed between the application layer and session layer. The session layer allows two application layer protocol entities to manage data exchanges by, for example, establishing and clearing communication channels between the entities. The session layer is disposed between the presentation layer and the transport layer. The transport layer acts as an interface between higher application oriented layers and lower network oriented layers by providing the session layer with a message transfer facility that is independent of the underlying network type. The transport layer is disposed between the session layer and the network layer. By providing the session layer with a predefined set of message transfer facilities, the transport layer hides the detailed operation of the underlying network from the session layer. The network layer is responsible for establishing and clearing a network connection between to transport layer protocol entities and includes such functionality as network routing. The network layer is disposed between the transport layer and the link layer. The link layer builds on a physical connection provided by the network to provide the network layer with information transfer facilities such as error correction and retransmission of messages in the event of a transmission error. The link layer is disposed between the network layer and the physical layer. The physical layer provides the physical and electrical interfaces between the node and the network.

At each layer of the protocol stack in the source, a PDU containing data and control information from the previous layer is augmented by control information from the current layer. Data from the source application program is augmented by a header portion containing application layer protocol control information at the application layer to form an application layer PDU (APDU). The APDU is augmented by a header portion containing presentation layer protocol control information at the presentation layer to form a presentation layer PDU (PPDU). The PPDU is augmented by a header portion containing session layer protocol control information at the session layer to form a session layer PDU (SPDU). The SPDU is augmented by a header portion containing transport layer protocol control information at the transport layer to form a transport layer PDU (TPDU). The TPDU is augmented by a header portion contain network layer protocol control information at the network layer to form a network layer PDU (NPDU). The NPDU is augmented by link layer protocol control information at the link layer to form a physical layer PDU or datagram for communication to the destination on the physical network.

In some data communications environments, the application layer, presentation, and session layer functions may be combined into a single protocol layer. An example of such an environment is that of the Transmission Control Protocol/Internet Protocol (TCP/IP) environment. In the TCP/IP environment, the combined functionality of the application layer, the presentation layer, and the session layer is provided via a plurality of protocols such as the File Transfer Protocol (FTP); the Remote Terminal Protocol (TELNET); the Simple Mail Transfer Protocol (SMTP), and the Name Server Protocol (NSP). The transport layer is provided by the Transmission Control Protocol and/or the User Datagram Protocol (UDP). The network layer is provided by the Internet Protocol (IP). Data from a source application is augmented by a header portion containing TCP control information at the TCP layer to from a TCP PDU. The TCP PDU is augmented by header information contain IP protocol control information at the IP layer to form a TCP/IP datagram

In a typical TCP/IP network, the addresses and the source and destination nodes are embedded in each datagram to be communicated. At the application program in the source, the address of the destination is typically symbolic in form. For example, the name of a remote host system connected to the network would be regarded as a symbolic address. To effect communication of a PDU from the source node to the destination node, the symbolic network address is translated into a binary network layer address. The translation process is generally known as address resolution. Address resolution is typically performed at the transport and network layers of the protocol stack at the source node. The network then performs routing at intermediate nodes based on the address of the destination node. Routing tables are employed at the intermediate nodes to direct the datagram to the next best hop on its path to the destination. Further details of address resolution can be found in Douglas E. Comer: Internetworking with TCP/IP. Volume 1, Second Edition, Prentice Hall 1991.

Address resolution typically involves a lookup function in a distributed database. In operation, the database maps the symbolic address to the corresponding binary network layer address. In general, the source node is either connected to the database, or has a locally stored replica thereof. For example, in a typical TCP/IP network, there is usually provided a Domain Name System (DNS) in which distributed name servers are employed for facilitating TCP/IP communications between nodes. Conventionally, the nodes of fixed networks have sufficient computing resources to either perform the aforementioned address look up function over the network or to otherwise cache excerpts of the name services required to perform address resolution. Additionally, the network infrastructure generally has sufficiently low latency and sufficiently high bandwidth to rapidly deliver the data required for address resolution on demand.

A typical mobile data communications network, such as a Wireless Application Protocol (WAP) network, comprises a plurality of mobile data processing devices. The mobile devices are capable of communicating with each other via the wireless network and also with remote host data processing nodes in a fixed network. Such devices typically comprise a processor, a memory connected to the processor, computer program code stored in the memory and executable by the processor, and a network interface to couple the node to the network. The computer program code includes application programs for effecting data communication under program control with other devices in the network via the network interface. Examples of such devices include mobile telephones and personal digital assistants. The mobile devices typically communicate with the fixed network via a gateway connected to the fixed network. In a WAP network, the host systems in the wired network are known as origin servers. In general, mobile data processing devices do not have as much memory available as data processing nodes of a fixed network. Also, mobile devices are usually limited in data storage capability for a variety of reasons, including power consumption, physical volume, and weight. Mobile networks have lower bandwidth and higher latency than fixed networks. Therefore, the data traffic handling capability of mobile networks is generally more limited than that of fixed networks. Also, a permanent connection between a mobile network and the devices therein is not usually maintained in the interests of preserving power reserves. There are also location dependent interruptions in the connection of a mobile device in transit and the mobile network as the device roams from one region of network coverage to another. It will be appreciated therefore that maintaining an up to date record of address resolution information in a mobile device is very difficult indeed.

A conventional solution to this problem is to defer address resolution to a network gateway through which mobile devices connect to the mobile network. The network gateway performs address resolution from a symbolic address to a network layer address. An example of this approach can be found in WAP networks. Typically, a mobile device connects to a WAP network via a pull proxy server usually known as a WAP gateway. The WAP gateway performs the address resolution. The mobile device has an application layer protocol for effecting data communications between the resident applications and the WAP gateway. However, a symbolic destination address is sent from the mobile device to the WAP gateway in the form of a Universal Resource Locator (URL) because the mobile device does not perform address resolution. A session layer protocol known as the Wireless Session Protocol (WSP) effects communication of the URL from the mobile device to the gateway. The URL is then resolved by an Hypertext Transfer Protocol/Transmission Control Protocol/Internet Protocol (HTTP/TCP/IP) stack at the gateway. Specifically, the HTTP element performs the IP address resolution. Further details of WSP can be found in WAP Forum: Wireless Application Protocol: Wireless Session Protocol Specification, May 2000.

It would be desirable to employ such a mobile network to communicate encrypted information where session layer and/or lower layer data payloads are encrypted according to a security protocol such as the Wireless Transport Layer End to End Security (WTLS) protocol specified by the WAP Forum. Further details of the WTLS protocol can be found in WAP Forum: Wireless Application Protocol: Wireless Transport Layer End to End Security Specification. July 2000 . However, such security protocols typically involve encryption of the symbolic destination address. The encrypted address is then decrypted before address resolution can be performed at the gateway. The decryption breaks end to end security. Thus, the secure communications channel, known as a WTLS session in a WAP network, extends from the mobile device as far as the gateway only and not beyond. For security sensitive applications such as finance or medical applications, this is undesirable.

A conventional solution to the problem of providing end to end security in a mobile data communications network involves redirection of session layer traffic to a secondary pull proxy server resident in a secure domain established by the communications service provider Provisioning information in the form of a navigation document is then supplied to the mobile device by the secondary server to allow the mobile device to redirect communications at the session layer. Another conventional solution is to perform destination address resolution at the mobile device with subsequent tunneling at the transport layer by the gateway. The transport layer tunnel is established by a peer-proxy protocol compliant with either UDP or the Wireless Datagram Protocol, a WAP communication protocol analogous to UDP. This approach however incurs additional processing.

US-A-6 119 171 discloses encryption of the symbolic control information.

In accordance with the present invention, there is now provided a computing device according to claim 1.

The present invention also extends to a mobile telephone comprising a computing device as hereinbefore described. Similarly, the present invention extends to a server computer system comprising a computing device as hereinbefore described.

Viewing the present invention from another aspect, there is now provided a method according to claim 4.

There is also provided a computer program according to claim 5.

In a preferred embodiment of the present invention, symbolic address information is embedded into network layer datagrams separately from the data payloads. Data communications are then effected via the gateway. The network layer at the gateway detects the symbolic address and resolves it into a network layer address. Embedding is performed so that the payload of the network layer protocol data unit remains unaffected. The address resolution is transparent to protocol layers higher up the stack. No decryption of payload data is needed. Thus, end to end network security can be maintained. The present invention is equally applicable to types of embedded control information other than address data.

Embodiments of the present invention are superior to the aforementioned conventional solutions because they avoid the introduction of additional traffic between the server, the gateway, and the mobile device otherwise brought about by the supply of a navigation document to the mobile device, and because they avoid session redirection and/or execution of a peer proxy protocol. The conventional solutions hereinbefore described also incur other overheads such as reconfiguration of the mobile device and management of the navigation documents both in the mobile device and in the network infrastructure are likewise avoided by embodiments of the present invention. Redirection of communications via a navigation document involves the establishment of two connection for every destination server beyond the gateway. The connection set up time is thus incurred twice. This adds to the response time perceived by the end user. In preferred embodiments of the present invention, only a single connection set up need be established. The same connection can then be used for communications with multiple different destination servers.

Preferred embodiments of the present invention will now be described, by way of example only, with reference to the accompanying drawings, in which:
Figure 1 is a block diagram of an example of a data processing system;
Figure 2 is a block diagram of an example of a mobile data communications environment;
Figure 3 is a simplified block diagram of a datagram for communication within the environment;
Figure 4 is a block diagram of a communications path from a source node to a destination via a network;
Figure 5 is another block diagram of the communications path;
Figure 6 is another block diagram of a datagram from communication within the environment;
Figure 7 is yet another block diagram of a datagram from communication within the environment;

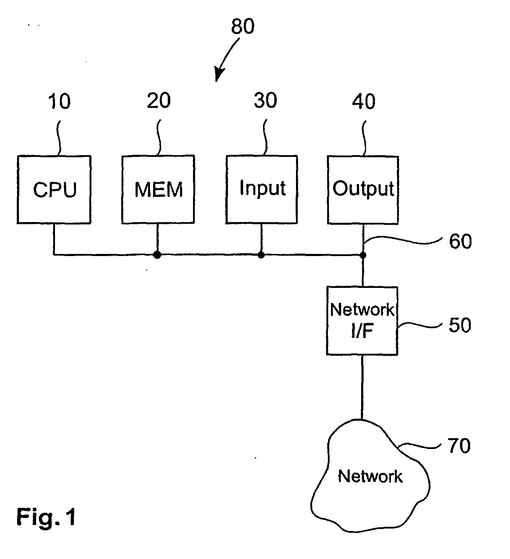

Referring first to figure 1, an example of a data processing system 80 comprises: a central processing unit (CPU) 10; a memory subsystem 20; a user input subsystem 30; a user output subsystem 40, and network interface 50 all interconnected by bus subsystem 60. In operation, the central processing unit 10 executes computer program instruction codes stored in the memory subsystem 20. The computer program codes include operating system software and application program software for execution in conjunction with operating system software.

The application program software operates on data stored in the memory subsystem 20. The user can control execution of the application software via the user input subsystem 30. Application software and data can be communicated between the memory subsystem 20 and an external data network 70 via the network interface 50.

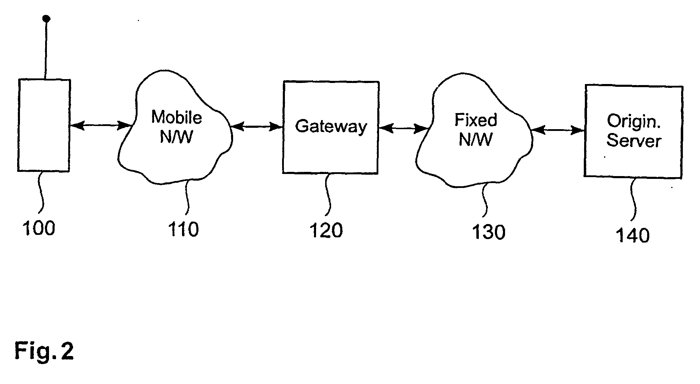

Referring now to Figure 2, an example of a mobile data communications environment comprises a mobile data processing device 100 connected to a mobile data communications network 110. The mobile network 110 is connected to a fixed data communications network 130 via a gateway 120. An origin server 140 is connected to the gateway 120 via the fixed network 130. The mobile device 100, the gateway 120, and the origin server 140 each comprise the data processing system 80 hereinbefore described with reference to Figure 1. The mobile device 100 may be a mobile telephone, persona digital assistant or the like, or an embedded system, e.g. a mobile sensor.

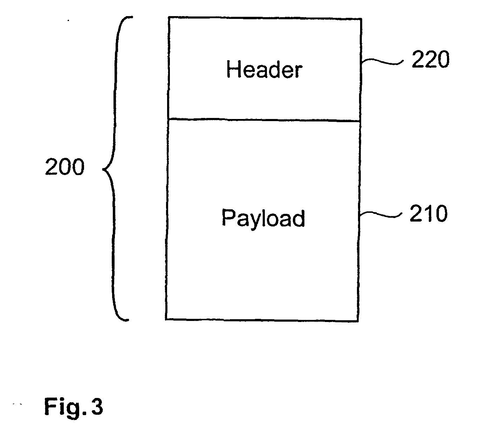

Data communications between mobile device 100, the gateway 120, and the origin server 140 is effected via the fixed network 130 and the mobile network 110 through execution of computer program code by the central processing units 10 of mobile device 100, the gateway 120, and the server 140. With reference to Figure 3, as mentioned earlier, data traffic is communicated from a source node to a destination in discrete packets or protocol data units (PDUs) 200. Each PDU 200 comprises a header portion 220 and a payload portion 210. The payload portion 210 carries data to be communicated. The header portion 220 carries control information for effecting communication of the PDU 200 to the destination.

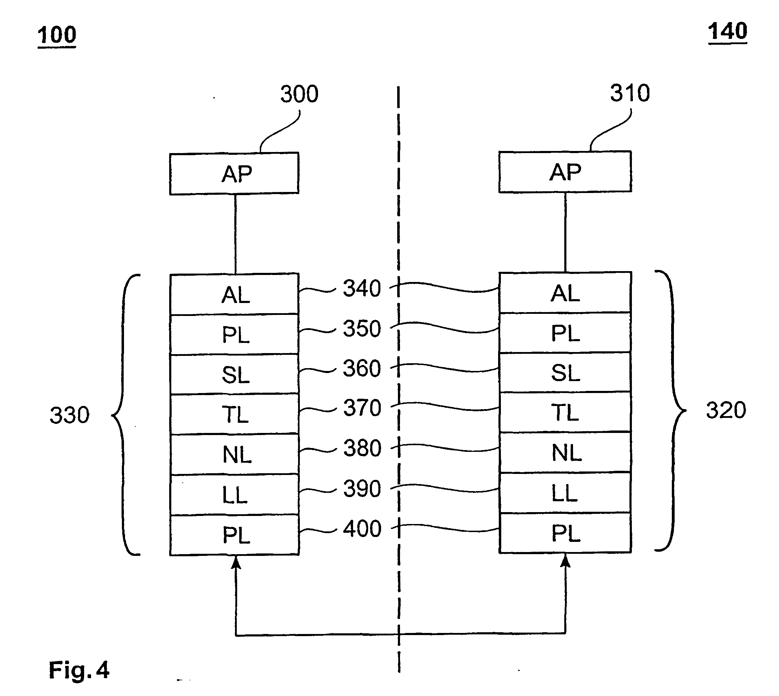

Referring now to Figure 4, data is communicated from a source application program 300 in the mobile device 100 to a destination application program 310 in the server 140 in accordance with the International Standards Organization (ISO) reference model. The ISO reference model defines a stack of logical data processing protocol layers between the source and destination application programs 300 and 310 and the network infrastructure intervening between the mobile device 100 and the server 140. Such a protocol stack 330 is resident in the mobile device 100. A similar protocol stack 320 is resident in the server 140. Data to be communicated from the source application program 300 to the designation application program 310 are passed in PDUs 200 from the source application program 300 to the network infrastructure via the protocol stack 330 in the mobile device 100. On receipt, the PDUs 200 are passed from the network infrastructure to the destination application program 310 via the protocol stack 320 in the server 140.

The protocol stacks 320 and 330 each comprise an application layer 340, a presentation layer 350, a session layer 360, a transport layer 370, a network layer380, a link layer 390, and a physical layer 400. The application layer 340 provides a user interface to a range of network-wide distributed services such as file transfer access and management, as well as general message interchange services such as electronic mail. The application layer 340 is disposed between the application program 300 and the presentation layer 350. The presentation layer 350 negotiates and selects appropriate transfer syntaxes to be used during a transaction so that the syntax of messages being exchanged between two application entities is maintained. The presentation layer 350 is disposed between the application layer 340 and session layer 360. The session layer 360 allows two application layer protocol entities to manage data exchanges by, for example, establishing and clearing communication channels between the entities. The session layer 360 is disposed between the presentation layer 350 and the transport layer 370. The transport layer 370 acts as an interface between higher application oriented layers and lower network oriented layers by providing the session layer 360 with a message transfer facility that is independent of the underlying network type. The transport layer 370 is disposed between the session layer 360 and the network layer 380. By providing the session layer 360 with a predefined set of message transfer facilities, the transport layer 370 hides the detailed operation of the underlying network from the session layer 360. The network layer 380 is responsible for establishing and clearing a network connection between to transport layer protocol entities and includes such functionality as network routing. The network layer 380 is disposed between the transport layer 370 and the link layer 390. The link layer 390 builds on a physical connection provided by the network to provide the network layer 380 with information transfer facilities such as error correction and retransmission of messages in the event of a transmission error. The link layer 390 is disposed between the network layer 380 and the physical layer 400. The physical layer 400 provides the physical and electrical interfaces between the node and the network.

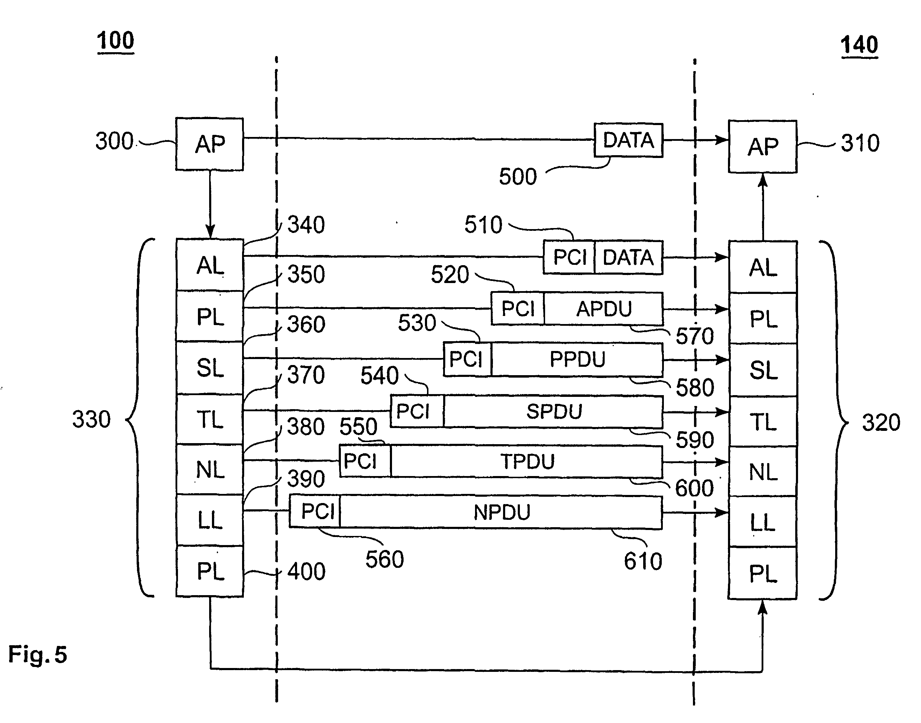

Referring now to Figure 5, at each layer of the source protocol stack 330, a PDU containing data and control information from the previous layer is augmented by control information from the current layer. Data 500 from the source application program 300 is augmented by a header portion 510 containing application layer protocol control information at the application layer 340 to form an application layer PDU (APDU) 570. The APDU 570 is augmented by a header portion 520 containing presentation layer protocol control information at the presentation layer 350 to form a presentation layer PDU (PPDU) 580. The PPDU 580 is augmented by a header portion 530 containing session layer protocol control information at the session layer 360 to form a session layer PDU (SPDU) 590. The SPDU 590 is augmented by a header portion 540 containing transport layer protocol control information at the transport layer 370 to form a transport layer PDU (TPDU) 600. The TPDU 600 is augmented by a header portion 550 contain network layer protocol control information at the network layer 380 to form a network layer PDU (NPDU) 610. The NPDU 610 is augmented by a header portion 560 containing link layer protocol control information at the link layer 390 to form a physical layer PDU for communication to the server 140 via the physical network. The PDU transmitted on the network is sometimes referred to as a datagram. At the server 140, the received PDU is progressively reduced as it passes through the layers of the stack 320 until the data 500 is recovered and provided to the destination application program 310.

With reference to Figures 2, 4, and 5 in combination, the gateway 120 also comprises a protocol stack similar to that of the mobile device and the server 140. However, the gateway stack had been omitted from figures 4 and 5 in the interests of simplicity of explanation.

Referring back to Figures 2 and 3, the address of both the source mobile device 100 and the destination server 140 are embedded in each PDU to be sent from the mobile device 100 to the server 140. At the application program 300 in the mobile device 100, the address of the server 140 is symbolic in form. Specifically, the address of the server 140 is presented at the application program 300 in the mobile device 100 as the name of the server 140, e.g..: www.server.com. To effect communication of the PDU from the mobile device 100 to the server 140, the symbolic network address is translated into a binary network layer address by an address resolution function. End to end security in the communications environment is maintained by embedding protocol control information such as symbolic address information into datagrams at the network layer 380 of the protocol stack 300.

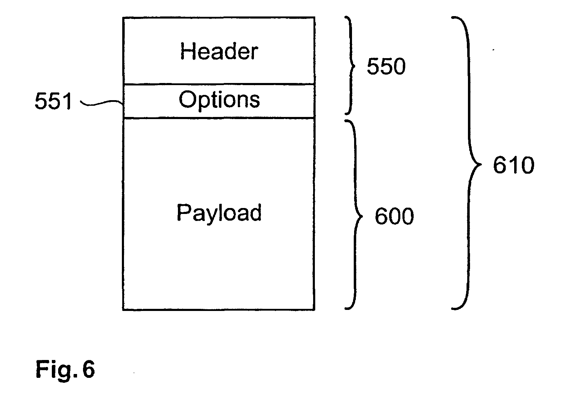

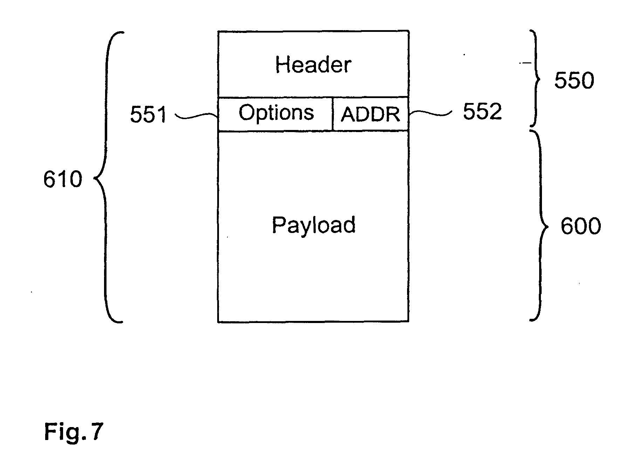

Referring now to Figure 6, the header portion 550 of the NPDU 610 comprises a variable length options field 551. The options field 551 is employed for placing additional parameter data in the header portion 550 of the NPDU 610. With reference to Figure 7, control information 552 such as symbolic addresses are embedded into the options field 551 in the header portion 550 of each NPDU 610.

The control information 552 is copied at the source network layer 380 into an existing option code within the options field 551. The existing option code is selected and configured such that intervening routers do not intercept the control information 552 before the intended destination is reached. With reference to Figure 2, the network layer 380 on the gateway 120 is again enabled to intercept and extract any symbolic address information 552 contained in the option field 551 of NPDUs 610 received from the mobile device 100, and to act as an agent for performing address resolution. The original payload 600 remains unaffected as it passes from the mobile device 100 to the final destination server 140. End to end security is thus again achieved. An example of a PDU having an option field is a TCP/IP PDU. As indicated earlier, in a TCP/IP environment, the network layer protocol is IP. The IP header 610 of the NPDU 610 comprises an options field 551. Pre-assigned option codes for inclusion in the IP options field include Source routing option codes such as "loose source and record route" (LSRR) and "strict source and record route" (SSRR) option codes. LSRR and SSRR are both suitable for redefinition to include control information such as symbolic address data. When the SSRR option is employed, it is set to indicate that there can be only a single hop between the origin of the datagram and the point where address resolution takes place. Otherwise, intermediate routers implementing source routing would incorrectly interpret and potentially modify the symbolic address information in the SSRR option field. A single hop is not a limitation in most practical arrangements because the mobile device 100 and the fixed network 130 are typically separated by a single access hop at the gateway 120. For example, referring back to Figure 2, the mobile device 100 is removed from the gateway 120 by one access hop through the mobile network 110.

## Claims

1. At computing device compnsing: a processor (10) a memory (20) connected to the processor; an application program (300) stored in the memory and executable by the processor for generating data for communication to a remote computer system via a network (70) based on a symbolic control information comprising a symbolic network address of the remote system, a communications protocol stack (330) stored in the memory and executable by the processor for effecting communication of the data from the device to the remote system, the protocol stack having an application layer (340) for receiving the data from the application program and locating the data received in an application layer protocol data unit, and a network layer (380) for receiving the application layer protocol data unit from the application layer locating the application layer protocol data unit in a network layer protocol data unit (610), locating the symbolic control information in an options field (551) of the network layer protocol data unit separately from the application layer protocol data unit, and forwarding the network layer protocol data unit to the network for transmission to the remote system; the device being **characterized by** the network layer being adapted to write the symbolic control information into an existing option code.

2. A mobile telephone comprising a computing device as claimed in claim 1.

3. A server computer system comprising a computing device as claimed in claim 1.

4. A method for communicating data between a computer device (10) and a remote computer system, the method comprising: generating the data by an application program (300) in the computing device for communication to the remote system via a network (70) based on a symbolic control information comprising a symbolic network address of the remote system; receiving the data by an application layer (340) of a communications protocol stack in the computing device; locating, by the application layer, the data in an application layer , protocol data unit; forwarding by the application layer the application layer protocol data unit to a network layer (380) of the protocol stack; receiving at the network layer the application layer protocol data unit from the application layer, locating by the network layer the application layer protocol data unit in a network layer protocol data unit (610) locating by the network layer the symbolic control information in an options field of the network layer protocol data unit separately from the application layer protocol data unit; and forwarding by the network layer the network layer protocol data unit to the network for transmission to the remote system; the method being **characterized by** the network layer writing the symbolic control information into an existing option code.

5. A computer program comprising computer program code which, when loaded in a processor of a computer system configures the processor to perform a method as claimed in claim 4.

## Patentansprüche

1. Rechnereinheit, die Folgendes umfasst: einen Prozessor (10), einen Speicher (20), der an den Prozessor angeschlossen ist, ein Anwendungsprogramm (300), das im Speicher gespeichert ist und das vom Prozessor ausführbar ist, um Daten für den Austausch zu einem Ferncomputersystem über ein Netz (70) zu erzeugen, das auf symbolischen Kontrollinformationen beruht, die eine symbolische Netzadresse vom Fernsystem umfassen, einen Austauschprotokollstapel (3305), der im Speicher gespeichert ist und der vom Prozessor ausführbar ist, um den Austausch der Daten von der Einheit zum Fernsystem auszuführen, wobei der Protokollstapel eine Anwendungsschicht (340) aufweist, um die Daten vom Anwendungsprogramm zu empfangen und die empfangenen Daten in einer Anwendungsschichtprotokoll-Dateneinheit zu lokalisieren, und eine Netzschicht (380), um die Anwendungsschichtprotokoll-Dateneinheit von der Anwendungsschicht zu empfangen, die Anwendungsschichtprotokoll-Dateneinheit in einer Netzschichtprotokoll-Dateneinheit (610) zu lokalisieren, die symbolischen Kontrollinformationen in einem Optionsfeld (551) von der Netzschichtprotokoll-Dateneinheit getrennt von der Anwendungsschichtprotokoll-Dateneinheit zu lokalisieren, und um die Netzschichtprotokoll-Dateneinheit zum Netz für die Übertragung zum Fernsystem weiterzuleiten, wobei die Einheit **dadurch gekennzeichnet ist, dass** die Netzschicht so gestaltet ist, dass sie die symbolischen Kontrollinformationen in einen bestehenden Optionscode schreibt.

2. Bewegliches Telefon, das eine Rechnereinheit nach Anspruch 1 umfasst.

3. Servercomputersystem, das eine Rechnereinheit nach Anspruch 1 umfasst.

4. Verfahren zum Austausch von Daten zwischen einer Rechnereinheit (10) und einem Ferncomputersystem, wobei das Verfahren Folgendes umfasst: Erzeugen der Daten durch ein Anwendungsprogramm (300) in der Rechnereinheit für den Austausch zum Fernsystem über ein Netz (70), das auf symbolischen Kontrollinformationen beruht, die eine symbolische Netzadresse vom Fernsystem umfassen; Empfangen der Daten durch eine Anwendungsschicht (340) von einem Übertragungsprotokollstapel in der Rechnereinheit; Lokalisieren, durch die Anwendungsschicht, der Daten in einer Anwendungsschichtprotokoll-Dateneinheit; Weiterleiten durch die Anwendungsschicht der Anwendungsschichtprotokoll-Dateneinheit zu einer Netzschicht (380) vom Protokollstapel; Empfangen an der Netzschicht der Anwendungsschichtprotokoll-Dateneinheit von der Anwendungsschicht; Lokalisieren durch die Netzschicht der Anwendungsschichtprotokoll-Dateneinheit in einer Netzschichtprotokoll-Dateneinheit (610); Lokalisieren durch die Netzschicht der symbolischen Kontrollinformationen in einem Optionsfeld von der Netzschichtprotokoll-Dateneinheit, getrennt von der Anwendungsschichtprotokoll-Dateneinheit; und Weiterleiten durch die Netzschicht der Netzschichtprotokoll-Dateneinheit zum Netz für die Übertragung zum Fernsystem; wobei das Verfahren **dadurch gekennzeichnet ist, dass** die Netzschicht die symbolischen Kontrollinformationen in einen bestehenden Optionscode schreibt.

5. Computerprogramm, das einen Computerprogrammcode umfasst, der, wenn er in einem Prozessor von einem Computersystem geladen ist, den Prozessor konfiguriert, um ein Verfahren nach Anspruch 4 auszuführen.

## Revendications

1. Dispositif de traitement informatique comprenant : un processeur (10), une mémoire (20) reliée au processeur, un programme d'application (300) mémorisé dans la mémoire et pouvant être exécuté par le processeur en vue d'une génération de données pour une communication avec un système informatique distant par l'intermédiaire d'un réseau (70) sur la base d'informations de commande symboliques comprenant une adresse de réseau symbolique du système distant, une pile de protocoles de communications (330) mémorisée dans la mémoire et pouvant être exécutée par le processeur pour effectuer une communication des données depuis le dispositif vers le système distant, la pile de protocoles comportant une couche d'application (340) destinée à recevoir les données provenant du programme d'application et à localiser les données reçues dans une unité de données de protocole de la couche d'application, et une couche de réseau (380) destinée à recevoir l'unité de données de protocole de la couche d'application depuis la couche d'application, localiser l'unité de données de protocole de la couche d'application dans une unité de données (610) de protocole de la couche de réseau, localiser les informations de commande symboliques dans un champ d'options (551) de l'unité de données de protocole de la couche de réseau séparément de l'unité de données de protocole de la couche d'application, et retransmettre l'unité de données de protocole de la couche de réseau vers le réseau en vue d'une transmission au système distant, le dispositif étant **caractérisé par le fait que** la couche de réseau est conçue pour écrire les informations de commande symboliques dans un code d'option existant.

2. Téléphone mobile comprenant un dispositif de traitement informatique selon la revendication 1.

3. Système informatique serveur comprenant un dispositif de traitement informatique selon la revendication 1.

4. Procédé destiné à communiquer des données entre un dispositif informatique (10) et un système informatique distant, le procédé comprenant : la génération des données par un programme d'application (300) dans le dispositif de traitement informatique en vue d'une communication avec le système distant par l'intermédiaire d'un réseau (70) sur la base d'informations de commande symboliques comprenant une adresse de réseau symbolique du système distant, la réception des données par une couche d'application (340) d'une pile de protocoles de communications dans le dispositif de traitement informatique, la localisation, par la couche d'application, des données dans une unité de données de protocole de la couche d'application, la retransmission par la couche d'application de l'unité de données de protocole de la couche d'application vers une couche de réseau (380) de la pile de protocoles, la réception au niveau de la couche de réseau de l'unité de données de protocole de la couche d'application provenant de la couche d'application, la localisation par la couche de réseau de l'unité de données de protocole de la couche d'application dans une unité de données de protocole de la couche de réseau (610), la localisation par la couche de réseau des informations de commande symboliques dans un champ d'options de l'unité de données de protocole de la couche de réseau séparément de l'unité de données de protocole de la couche d'application, et la retransmission par la couche de réseau de l'unité de données de protocole de la couche de réseau vers le réseau en vue d'une transmission au système distant, le procédé étant **caractérisé par le fait que** la couche de réseau écrit les informations de commande symboliques dans un code d'option existant.

5. Programme informatique comprenant un code de programme informatique qui, lorsqu'il est chargé dans un processeur d'un système informatique, configure le processeur pour qu'il exécute un procédé selon la revendication 4.
